# NEUE EUROPÄISCHE PATENTSCHRIFT

(11) **EP 1 785 618 B2**
(45) Veröffentlichungstag und Bekanntmachung des Hinweises auf die Entscheidung über den Einspruch: **15.01.2020**
(45) Hinweis auf die Patenterteilung: 07.01.2009
(21) Anmeldenummer: 06023298.0
(22) Anmeldetag: 09.11.2006
(51) Int. Cl.: F02M 37/00, F02M 43/00, F17C 7/02

(54) **Kraftstoffkühlsystem für Verbrennungskraftmaschinen**
Fuel cooling system for internal combustion engines
Système de refroidissement de carburant pour moteur à combustion interne

(30) Priorität: 13.11.2005 DE 102005054451
(43) Veröffentlichungstag der Anmeldung: 16.05.2007
(73) Patentinhaber: Vialle Alternative Fuel Systems B.V., 5626 EA Eindhoven (NL)
(72) Erfinder: Winkelmann, Karlheinrich, 33617 Bielefeld (DE)
(74) Vertreter: Brantsandpatents bvba

(56) Entgegenhaltungen:
- EP-A2- 1 293 654
- DE-A1- 10 146 051
- DE-A1- 10 320 558
- DE-U1- 20 310 824

## Beschreibung

### Stand der Technik

Die Erfindung betrifft ein Kraftstoffkühlsystem nach dem Oberbegriff von Anspruch 1. Entsprechende Systeme werden zur Kühlung von Kraftstoff bei Verbrennungskraftmaschinen, insbesondere fremdgezündeten Kolbenmaschinen mit zyklischer innerer Verbrennung und Direkteinspritzung von Flüssiggas in flüssigem Aggregatzustand oder anderer flüssiger Kraftstoffe in den Brennraum eingesetzt.

Ein System nach dem Oberbegriff des Anspruchs 1 ist beispielsweise aus DE 203 10 824 bekannt. Bei der Kraftstoffzuführung direkt einspritzender Ottomotoren ist ein bedarfsgeregeltes Kraftstoffsystem bekannt, bestehend aus einem Niederdruck- und einem Hochdruckteil, mit dem Vorteil, immer nur soviel Kraftstoff zu fördern, wie der Motor gerade benötigt, wodurch mechanische und elektrische Antriebsleistung gespart wird. Dies verringert den Wärmeeintrag in den Kraftstoff und spart Kraftstoff.

Die Hochdruckkraftstoffpumpe ist in der Regel eine mechanisch angetriebene, mengengeregelte Einzylinder-Kraftstoffpumpe, die kennfeldgeregelt nur soviel Kraftstoff in den Kraftstoffverteiler pumpt, wie für die Einspritzung benötigt wird. Diese Hochdruckpumpen sind rücklauflos. In der aktuellsten Form entfällt sogar eine Leckageleitung. Überschüssiger Kraftstoff wird intern in den Vorlauf der Niederdruckseite zurückgepumpt.

Diese Konfiguration ist ausgelegt auf den Kraftstoff Benzin und für diesen optimiert, zumal durch vorübergehende Erhöhung des Kraftstoffvordruckes in kritischen Betriebszuständen wie Kalt- oder Heißstart die Dampfblasenbildung des Kraftstoffes Benzin unterdrückt wird. Dadurch ist die Betriebsfähigkeit des Motors in allen Betriebszuständen gewährleistet, selbst bei Temperaturen am Hochdruckgehäuse von über 70°C.

Für den Kraftstoff Flüssiggas (LPG) sind diese Temperaturen aber zu hoch um Verdampfung im Kraftstoffvorlauf mit vertretbarem konstruktivem Aufwand sicher zu verhindern. Insbesondere die Temperaturen beim Heißstart sind derart hoch, dass ein Heißstart wegen Kraftstoffdampfblasen in den Leitungen und den Kraftstoffpumpen mit dem Kraftstoff Flüssiggas praktisch nicht möglich ist.

Auch ist es bei direkt einspritzendem Betrieb von Ottomotoren mit Flüssiggas im flüssigen Aggregatzustand anzustreben mit einer niedrigeren Kraftstofftemperatur im Vorfördersystem zu arbeiten als beim Betrieb mit dem Kraftstoff Benzin, damit sich der Druckbedarf, der durch den höheren Verdampfungsdruck von Flüssiggas von vornherein höher ist als beim Kraftstoff Benzin, im Kraftstoffvorfördersystem verringert und sich in einer Größenordnung bewegt, die mit konstruktiven Mitteln bei wirtschaftlich vertretbarem Aufwand gut zu beherrschen ist. Zusätzlich erhöht eine niedrigere Kraftstofftemperatur die Dichte des Kraftstoffs, was bei ausgeführten Fahrzeugen zu einer Leistungserhöhung führte. Außerdem ist eine größere Kraftstoffdichte vorteilhaft hinsichtlich des begrenzten Zeitfensters für die Kraftstoffeinspritzung bei Direkteinspritzung, weil ich dadurch im gleichen Zeitraum mehr Kraftstoffmasse in den Brennraum einbringen kann

Ein weiterer, nicht zu vernachlässigender Nachteil höherer Kraftstofftemperaturen ist die Verringerung der inneren Kühlung beim Einspritzen in den Brennraum mit ungünstigen Folgcn für die Verdichtung oder den optimalen Zündzeitpunkt.

In der DE 101 46 051 ist deshalb eine zusätzliche Kühlvorrichtung für die Kraftstoffkühlung im Kraftstoffniederdruckssystem beschrieben, die ihre Kühlwirkung entweder aus dem Kältemittel einer Klimaanlage oder aus der Kühlwirkung verdampfenden Kraftstoffes bezieht. Diese Kühlvorrichtung kann jedoch ihre Wirkung bei den oben beschriebenen Kraftstoffhochdruckpumpen nicht ausreichend entfalten, da der Durchsatz an Kraftstoffmasse durch den Kraftstoffverbrauch der Brennkraftmaschine allein zu gering ist um eine hinreichende Kühlwirkung in allen Betriebszuständen der Verbrennungskraftmaschine zu sichern.

Gleiches gilt auch für die in DE 10 2004 060 450.9 vorgeschlagene Lösung.

In der DE 103 20 558.6 ist deshalb für die herkömmliche Konfiguration des Kraftstoffvorfördersystems als Lösung des Verdampfungsproblems von Flüssiggas durch zu hohe Kraftstofftemperaturen vorgeschlagen, dass bei Überschreitung einer definierten Temperatur, aus-gelöst durch einen Temperatursensor, automatisch von dem Kraftstoff Flüssiggas auf den Kraftstoff Benzin umgeschaltet wird. Die Verwendung von Flüssiggas als einzigem Betriebskraftstoff ist dadurch jedoch ausgeschlossen. Auch unter wirtschaftlichen Gesichtspunkten ist diese Lösung von Nachteil.

Aufgabe der Erfindung ist es, ein Kraftstoffvorfördersystem der eingangs genannten Art dahingehend zu verbessern, dass die genannten Nachteile behoben werden und dadurch eine effektivere, stabilere und beeinflußbare Kraftstoffkühlung erreicht wird.

Diese Aufgabe wird durch einen Gegenstand mit den Merkmalen des Anspruchs 1 gelöst. Vorteilhafte Ausführungsformen finden sich in den abhängigen Ansprüchen.

Die wärmemäßig kritische Stelle im Kraftstoffzuführungssystcm der Verbrennungskraftmaschine ist der Niederdruckbereich der Kraftstoffhochdruckpumpe und da besonders der Eingang zur Hochdruckkammer im Bereich des Einlassventils. Durch die erfindungsgemäße, vorteilhafte Herstellung der Rücklaufeinrichtung, einschließend den Anschluss für die Rücklaufleitung als Teil des Niederdruckbereiches, wird diese kritische Stelle kontinuierlich und umfassend von vorbeifließendem Kraftstoff gekühlt, wodurch Kraftstoffdampfblasen am Eingang des Hochdruckraumes mit nachfolgenden Stillstand des Motors vermieden werden.

Besonders wirkungsvoll verstärkt und stabilisiert wird der kühlende Effekt, wenn der Kraftstoff vor Eintritt in die Hochdruckpumpe durch einen Kühler geflossen ist. Wird dieser Kühler als Wärmetauscher an eine Klimaanlage gekoppelt, verstärkt sich der Kühleffekt. Verwendet man die Kraftstofftemperatur als Regelgröße im Regelkreis einer Klimaanlage, dann ist es möglich, die Temperatur des Kraftstoffes im Kraftstoffvorlauf auf einen gewünschten optimalen Wert einzuregeln.

### Vorteile der Erfindung

Diese Probleme werden durch die in den Patentansprüchen aufgeführten Merkmale gelöst, indem die vorliegenden Erfindung bewirkt, dass
a) durch den kühlenden, kontinuierlichen Fluss einer großen Kraftstoffmasse durch den erfindungsgemäß veränderten Niederdruckbereich der Kraftstoffhochdruckpumpe die Kraftstofftemperatur in allen Betriebsmodi niedrig bleibt,
b) sich durch die Leistungsregelung der Kraftstoffvorförderpumpe(n) die Kraftstoffvorlauftemperatur in gewünschter Weise beeinflussen lässt,
c) durch den Anschluss an ein regelbares Zusatzkühlsystem, wie eine Klimaanlage, die Vorlauftemperatur des Kraftstoffes in allen Betriebsmodi noch sichere und stabild, in einem definierten, optimalen Temperaturintervall gehalten wer den kann,
d) durch die hydraulisch in Reihe geschalteten Kraftstoffvorförderpumpen auch bei einem Vorförderdruck größer als 10 bar eine hinreichend große Masse an Kraftstoff zur Deckung des Kühlbedarfs umgewälzt wird.
e) die Kraftstoffhochdruckpumpe durch die kühlende Luft eines Kühlgebläses, welches seine Kühlluft aus dem kühlen Bereich eines Kühlers, vorzugsweise eines an die Klimaanlage angeschlossenen Wärmetauschers, absaugt, gekühlt wird und dadurch die Kraftstofftemperatur im Niederdruckbereich der Hochdruckpumpe niedrig hält.
f) durch die, in allen Betriebszuständen ausreichende Kraftstoffkühlung, ein monovalenter Betrieb der Brennkraftmaschine mit direkt und flüssig in den Brennraum eingespritztem Flüssiggas möglich wird,
g) durch die Beaufschlagung der Federkammer eines mechanischen Druckregelventils mit dem Tankdruck jede Temperaturerhöhung des Flüssiggases im Tank automatisch mit einer analogen Druckerhöhung des Kraftstoffvorfördersystems beantwortet wird.
h) die Federkammer des im Tank untergebrachten Druckregelventils direkt, ohne eine zusätzliche Zuführungsleitunp, mit dem im Tank herrschenden Gasdruck beaufschlagt wird, wodurch die Rückführungsleitung gespart und der Montageaufwand verringert wird und
i) sich die Kühlwirkung dadurch zusätzlich erhöht, weil dem im Rücklauf teilweise verdampfenden Kraftstoff im Tank ein vielfach größeres Ausdehnungsvolumen direkt zur Verfugung steht.

### Zeichnungen

### Ausführungsbeispiel

Es werden Ausführungsbeispiele in den Zeichnungen vereinfacht dargestellt und in der nachfolgenden Beschreibung erläutert.

Es zeigen:
**Figur 1** die hydraulische Schaltung des Kraftstoffkühlsystems mit einer Koppelung des Kraftstoffrücklaufs an die Füllleitung.
**Figur 2** die hydraulische Schaltung des Kraftstoffzuführungssystems mit einer separaten Rückführungsleitung in den Flüssiggastank und dem in diesem Tank untergebrachten hydraulischen Widerstand
**Figur 3** den Durchfluss durch den Niederdruckbereich der Hochdruckkraftstoftpumpe

### Beschreibung der Ausführungsbeispiele

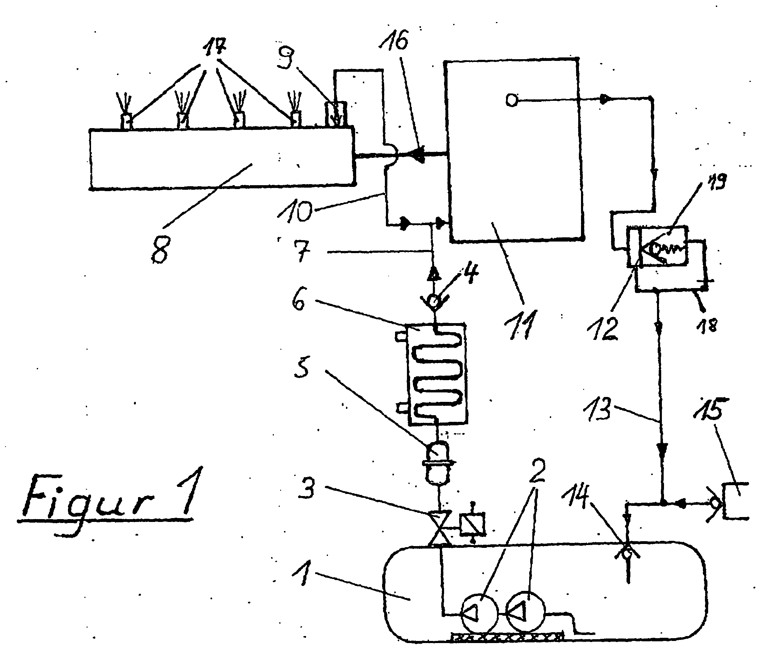

**Figur 1** zeigt schematisch die hydraulische Schaltung des Krafstoffzuführungssystems mit einer Koppelung des Kraftstoffrücklaufs **13** an die Füllleitung **15.** Aus einem, mit den vorschriftsmäßigen Sicherheitsarmaturen versehenen, druckfesten Tank für Flüssiggas **1** wird durch zwei hintereinander geschaltete Kraftstoffniederdruckpumpen **2** Flüssiggas durch die Kraftstoffvorlaufleitung **7** zur Kraftstoffhochdruckpumpe **11** gedrückt. Auf seinem Weg zur Hochdruckpumpe **11.** passiert das Flüssiggas nach dem Tankabsperrventil **3** den druckfesten Kraftstofffilter **5,** danach den, an eine (hier nicht gezeigte) Klimaanlage angeschlossenen, Wärmetauscher **6** und ein Rückschlagventil **4.** Der Wärmetauscher stellt hier den Stellort eines Kraftstofftemperaturregelkreises dar, der die optimale Kraftstoffvorlauftemperatur einstellt. Das Ruckschlagvenlil **4** hält den Systemdruck im Kraftstoffvorlauf auch nach Abstellen des Motors aufrecht und schützt den Kraftstofffilter **5** und den Wärmetauscher **6** vor Druckstößen im Falle des Abblasens von Kraftstoff durch das Überdruckventil **9** in der Hochdruckrail **8**.

Die Kraftstoffhochdruckpumpe **11** drückt den von der Einspritzregelung berechneten Teil des Kraftstoffes über die Hochdruckleitung **16** in die Kraftstoffleiste **8**. Von dort aus wird der Kraftstoff über Einspritzventile **17** direkt und flüssig in den (hier nicht gezeigten) Brennraum der Verbrenztungskraftmaschine eingespritzt.

Der überwiegende Teil des vorgeförderten Kraftstoffes fließt durch den Niederdruckteil **30** der Hochdruckpumpe **11** hindurch und wird über die Rücklaufleitung **13** anschließend wieder in den Flüssiggastank **1** zurückgeführt. Ein Druckregelventil **12** im Rücklauf **13** sorgt dafür, dass der Kraftstoffdruck so hoch bleibt, dass der Kraftstoff auf seinem Weg durch die Hochdruckpumpe **11,** trotz des dabei stattfindenden Wärmeeintrages durch Wärmeleitung aus dem Motorgehäuse und die Hochdruckerzeugung, flüssig bleibt. Die Rückführungsleitung **18,** die von der Rücklaufleitung **13** stromabwärts des Druckregelventils **12** abzweigt, wird in die Federkammer **19** des Druckregelventils zurückgeführt. Das bewirkt, dass die Fe-derkammer **19** mit dem im Kraftstofftank **1** herrschenden Verdampfungsdruck beaufschlagt wird und sich der hydraulische Widerstand analog dem Verdampfungsdruck verändert. Ein Rückschlagventil **14** versperrt dem Flüssiggas den Weg aus dem Flüssiggastank **1.** Die Rücklaufleitung 13 ist bei diesem Ausführungsbeispiel an die Füllvorrichtung **15** des Flüssiggastankes **1** angekoppelt. Dadurch erübrigt sich die gesonderte Einbringung der Rücklaufleitung **13** in den Kraftstofftank **1.**

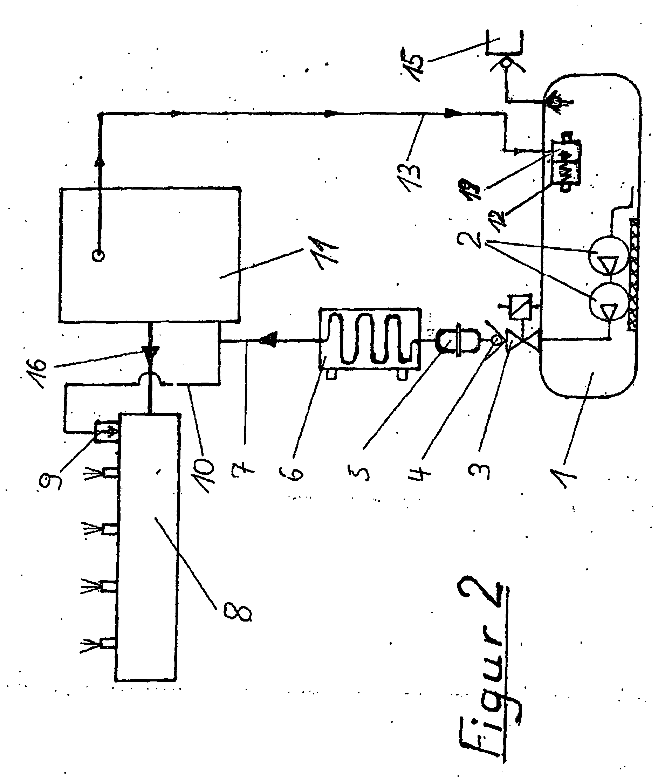

**Figur 2** zeigt eine Variante der hydraulischen Schaltung des in Figur 1 dargestellten Kraftstoffzuführungssystems bei der die Rückführmigsleitung **13** separat in den Flüssiggastank **1** zurückgeführt wird und den in diesem Tank **1** untergebrachten hydraulischen Widerstand **12,** dessen Federraum direkt mit dem Dampfdruck des Flüssiggas im Tank **1** beaufschlagt wird. Das spart die Rückführungsleitung **18** in die Federkammer und garantiert, dass die Kühlwirkung des teilweise verdampfenden Kraftstoffes vollständig seiner Kühlung zugute kommt, ohne Druckschwankungen durch Dampfblasen in der Rückleitung **13**

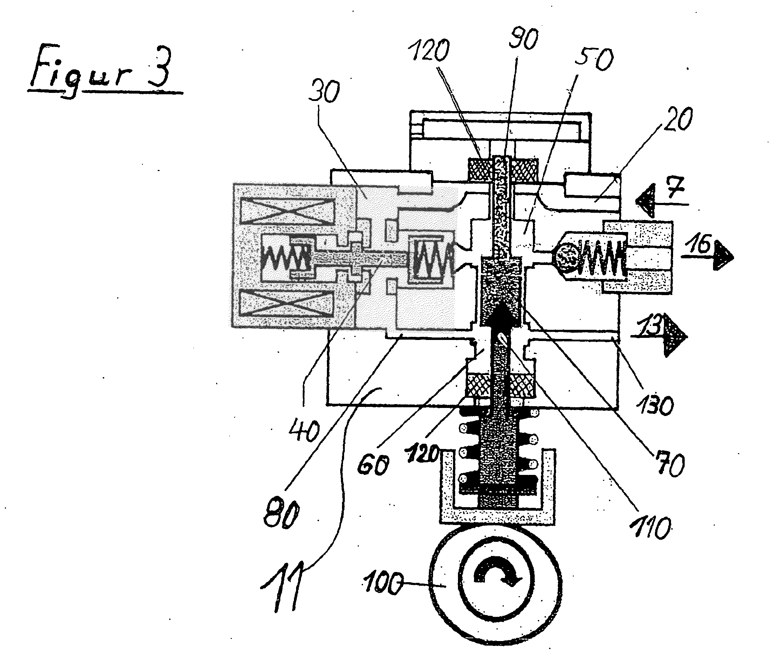

**Figur 3** zeigt schematisch eine Ausführung für den Weg des Kraftstoffes durch die Hochdruckpumpe **11.** Abgebildet ist eine mengengeregelte, kolbenflächengleiche, mechanisch angetriebene Ein-Kolben-Hochdruck-Kraftstoffpumpe **11**. Über die Zuflussbohrung **20** fließt der Kraftstoff aus der Niederdruckvorlaufleitung **7** in den Niederdruckbereich **30.** Bei geöffnetem Einlassventil **40** gelängt der Kraftstoff sowohl in den Pumpenraum **50** als auch über die Verbindungsbohrung **80** in den Pumpenunterraum **60** unter dem Pumpenkolben **70.** Eine weitere Bohrung zum unteren Pumpenunterraum **60** hin, die Abflussbohrung **130,** ermöglicht es dem Kraftstoff, unterhalb der Pumpenkammer **60** in die Niederdruckrücklaufleitung **13** abzufließen. Damit wird eine kontinuierliche Umströmung des Hochdruckpumpenraums **50** im Niederdruckbereich **30** der Kraftstoffbochdruckpumpe **11** erreicht, der die Abführung des Wärmeeintrages aus der Hochdruckpumpe 11 in den Kraftstoff bewirkt. Die hier abgebildete kolbenflächengleiche Variante einer Kraftstoffhochdruckpumpe **11** hat zusätzlich den Vorteil, dass sie den überschüssigen Kraftstoff im Pumpenraum **50** nicht gegen, den, im Flüssiggasbetrieb relativ hohen Vorförderdruck, zurückschieben muss, wodurch Antriebsenergie eingespart wird.

## Patentansprüche

1. Kraftstoffkühlsystem für mit Flüssiggas (LPG) betriebene Verbrennungskraftmaschinen, aufweisend einen Kraftstofftank (1), einer mit diesem in Verbindung stehenden, über wenigstens eine Kraftstoffvorförderpumpe (2) und eine Kraftstoffvorlaufleitung (7) mit Kraftstoff beschickten Kraftstoffhochdruckpumpe (11), die eine Rücklaufeinrichtung (130) aufweist, die über eine, einen hydraulischen Widerstand (12) aufweisende Kraftstoffrücklaufleitung (13) mit dem Kraftstofftank (1) verbunden ist,
**dadurch gekennzeichnet, dass die** Kraftstoffhochdruckpumpe (11) einen Niederdruckbereich (30), einen Hochdruckpumpenraum (50), und einen zwischen dem Niederdruckbereich und dem Hochdruckpumpenraum angeordnetes Einlassventil (40) zum Hochdruckpumpenraum (50) aufweist, wobei der Niederdruckbereich verbunden ist mit der Rucklaufeinrichtung (130) über eine Verbindungsbohrung (80), die so angeordnet ist, dass der in die Kraftstoffhochdruckpumpe zufließende Kraftstoff sowohl in den Hochdruckpumpenraum (50) der Kraftstoffhochdruckpumpe (11) als auch in den Pumpenunterraum (60) unter dem Pumpenkolben (70) und von dort zur Rücklaufeinrichtung (130) gelangt, so dass ein kontinuierlicher, vom aktuellen Kraftstoffbedarf der Verbrennungskraftmaschine unabhängiger, Kraftstofffluss durch den Niederdruckbereich (30) der Kraftstoffhochdruckpumpe (11) zustande kommt, und der hydraulische Widerstand (12) ein mechanisch arbeitendes Druckregelventil ist, dessen Federkammer (19) über eine Rückführungsleitung (18) mit dem, stromabwärts des Druckregelventils (12) entnommenen, Kraftstofftankdruck beaufschlagt wird, wobei der hydraulische Widerstand (12), im Flüssiggastank (1) platziert wird.

2. Kraftstoffkühlsystem für Verbrennungskraftmaschinen nach einem der vorhergehenden Ansprüche, **dadurch gekennzeichnet, dass** in dem Kraftstofftank (1) zwei Kraftstoffvorförderpumpen (2), vorzugsweise elektrisch angetrieben, hydraulisch in Reihe geschaltet sind.

3. Kraftstoffkühlsystem für Verbrennungskraftmaschinen nach einem der vorhergehenden Ansprüche, **dadurch gekennzeichnet, dass** die Kraftstofftemperatur im Vorlauf durch eine Leistungsregelung der Kraftstoffvorförderpumpe(n) (2) beeinflusst wird.

4. Kraftstoffkühlsystem für Verbrennungskraftmaschinen nach einem der vorhergehenden Ansprüche, **dadurch gekennzeichnet, dass** im Kraftstoffvorlauf (7) zur Kraftstoffhochdruckpumpe (11) hin eine Kühlvorrichtung (6) angeschlossen ist, die den Kraftstoff zusätzlich kühlt.

5. Kraftstoffkühlsystem für Verbrennungskraftmaschinen nach Anspruch 4, **dadurch gekennzeichnet, dass** die Kraftstoffkühlvorrichtung (6) regelbar ist und **dadurch** die Kraftstoffvorlauftemperatur in einem definierten Temperaturfenster hält.

6. Kraftstoffkühlsystem für Verbrennungskraftmaschinen nach Anspruch 4 oder 5, **dadurch gekennzeichnet, dass** die Kühlvorrichtung (6) an eine Klimaanlage angeschlossen ist.

7. Kraftstoffkühlsystem für Verbrennungskraftmaschinen nach einem der vorhergehenden Ansprüche, **dadurch gekennzeichnet, dass** die Kraftstoffhochdruckpumpe (11) durch ein Kühlluftgebläse, welches Kühlluft vorzugsweise aus der Umgebung eines Kühlers ansaugt, gekühlt wird.

## Claims

1. Fuel cooling system for liquefied petroleum gas (LPG) powered internal combustion engines, comprising a fuel tank (1), a high pressure fuel pump (11) connected thereto and supplied with fuel via at least one fuel pre-feed pump and a fuel flow pipe (7), said high pressure fuel pump (11) comprising a return device (130) which is connected to the fuel tank (1) via a fuel return pipe (13) having a hydraulic resistor (12), **characterised in that** the high pressure fuel pump (11) has a low pressure region (30), a high pressure pump chamber (50), and an inlet valve (40) arranged between the low pressure region and the high pressure pump chamber to the high pressure pump chamber (50), the low-pressure region being connected to the recirculation device (130) with a connecting bore (80) arranged so that the fuel flowing into the high pressure fuel pump is directed both into the high pressure pump chamber (50) of the high pressure fuel pump (11) and also into the lower pump chamber (60) under the pump piston (70) and from there reaches the return device (130), so that a continuous, independent of the current fuel consumption of the internal combustion engine, fuel flow through the low pressure region (30) of the high-pressure fuel pump (11) comes about, and the hydraulic resistor (12) is a mechanically working pressure regulating valve, of which the spring chamber (19) is impacted via a fuel return pipe (18) with the fuel tank pressure taken downstream of the pressure regulating valve (12), whereby the hydraulic resistor (12) is arranged in the liquid gas tank (1).

2. Fuel cooling system for internal combustion engines according to one of the preceding claims, **characterised in that** two fuel feed pumps (2), preferably electrically powered, are arranged in series hydraulically in the fuel tank (1).

3. Fuel cooling system for internal combustion engines according to one of the preceding claims, **characterised in that** the fuel temperature in the flow is influenced by regulating the power of the fuel feed pump(s) (2).

4. Fuel cooling system for internal combustion engines according to one of the preceding claims, **characterised in that** a cooling device (6) is connected in the fuel flow (7) to the high pressure fuel pump (11), said cooling device (6) additionally cooling the fuel

5. Fuel cooling system for internal combustion engines according to claim 4, **characterised in that** the fuel cooling device (6) can be regulated and the fuel flow temperature is thereby kept within a defined temperature window.

6. Fuel cooling system for internal combustion engines according to claim 4 or 5, **characterised in that** the cooling device (6) is connected to an air conditioning system.

7. Fuel cooling system for internal combustion engines according to one of the preceding claims, **characterised in that** the high pressure fuel pump (11) is cooled by a cooling air fan, which draws in cool air preferably from the environment.

## Revendications

1. Système de refroidissement de carburant pour moteurs à combustion interne alimentés au gaz de pétrole liquéfié (GPL), comprenant un réservoir de carburant (1) d'une pompe de carburant haute pression (11) en relation avec celui-ci et alimentée en carburant par l' intermédiaire d'au moins une pompe de pré-alimentation en carburant (2), et une conduite d' alimentation en carburant (7), laquelle pompe haute pression présente un dispositif de retour (130), qui est relie au réservoir de carburant (1) par l'intermédiaire d'une conduite de retour de carburant (13) présentant une résistance hydraulique (12), **caractérisé en ce que** la pompe à carburant haute pression (11) présente une zone basse pression (30), une chambre de pompe haute pression (50) et une soupape d'admission (40) disposée entre la zone basse pression et la chambre de pompe haute pression et reliée à la chambre de pompe haute pression (50), la zone basse pression étant raccordée au dispositif de recirculation (130) ayant un alésage de liaison (80) disposé de sorte que le carburant s'écoulant dans la pompe à carburant haute pression soit dirigé à la fois dans la chambre de pompe haute pression (50) de la pompe de carburant haute pression (11) et aussi dans la chambre de pompe inférieure (60) sous le piston de pompe (70) et de là passe vers le dispositif de retour (130), de sorte qu'un flux continu de carburant, indépendamment de la consommation de carburant actuelle du moteur à combustion interne, traverse la région basse pression (30) de la pompe à carburant haute pression (11), et la résistance hydraulique (12) est une soupape de réglage de pression a fonctionnement mécanique, dont la chambre à ressort (19) est soumise à la pression du réservoir de carburant prélevée en aval de la soupape de réglage de pression (12), par l'intermédiaire d'une conduite de retour (18), où la résistance hydraulique (12) est placée dans un réservoir de gaz liquéfié (1).

2. Système de refroidissement de carburant pour moteurs à combustion interne selon l'une des revendications précédentes, **caractérisé en ce que** dans le réservoir de carburant (1) deux pompes de pré-alimentation de carburant (2), entraînées de préférence électriquement, sont connectées hydrauliquement en série.

3. Système de refroidissement de carburant pour moteurs à combustion interne selon l'une des revendications précédentes, **caractérisé en ce que** dans la température du carburant est influencée à l'aller par une régulation de puissance de la / des pompe(s) de pré-alimentation de carburant (2).

4. Système de refroidissement de carburant pour moteurs à combustion interne selon l'une des revendications précédentes, **caractérisé en ce que,** dans la conduite d'aller du carburant (7) vers la pompe de carburant haute pression (11), est raccordé un dispositif de refroidissement (6) qui assure un refroidissement supplémentaire du carburant.

5. Système de refroidissement de carburant pour moteurs à combustion interne selon la revendication 4, **caractérisé en ce que** le dispositif de refroidissement (6) est réglable et maintient ainsi la température d'aller du carburant dans une fenêtre de température définie.

6. Système de refroidissement de carburant pour moteurs à combustion interne selon revendication ou 5, **caractérisé en ce que** le dispositif de refroidissement (6) est raccordé à une installation de conditionnement d'air.

7. Système de refroidissement de carburant pour moteurs à combustion interne selon l'une des revendications précédentes, **caractérisé en ce que** la pompe de carburant haute pression (11) est refroidie par une soufflante d'air de refroidissement qui aspire de l'air de refroidissement, de préférence dans l'environnement d'un réfrigérateur.
